# EUROPEAN PATENT APPLICATION

(11) **EP 1 148 452 A2**
(43) Date of publication of application: **24.10.2001**
(21) Application number: 01109407.5
(22) Date of filing: 19.04.2001
(51) Int. Cl.: G07F 19/00

(54) **Apparatus particularly for supporting sales over data communication networks**

(30) Priority: 20.04.2000 IT PD000102
(71) Applicant: Varotto, Massimiliano, 35020 Due Carrare (Prov. of Padova) (IT)
(72) Inventor: Varotto, Massimiliano, 35020 Due Carrare (Prov. of Padova) (IT)
(74) Representative: Modiano, Guido, Dr.-Ing.

(57) **Abstract**

An apparatus particularly for supporting sales over a data communication network, comprising: at least one first data processing unit, which is provided with an operating system and in which a database is implemented together with a corresponding management system adapted to store information related to the credit cards of customers, which are associated with access passwords, and with input/output peripherals; at least one second data processing unit for validating business rules, such as the methods for communicating transaction verification; at least one third processing unit, which is adapted to provide a channel for accessing the data communication network; at least one fourth processing unit for managing remote accesses, implemented software and hardware for protection such as a firewall or the like, implemented software suitable for management of communications and applications; the apparatus also comprising means for connection and management of warning/authorization communications with customers via network access, fixed telephony, fax, mobile telephony.

## Description

The present invention relates to an apparatus particularly for supporting sales over a data communication network.

As is known, currently there is considerable development in the manner in which trading transactions occur.

The evolution of data communications and especially of the Internet has allows the growth of trading companies and of true distributors which partially or fully operate over a data communication network.

Trading transactions performed by means of a data communication network usually require the user to pay optionally by means of a credit card.

Typically, in fact, in this case, the user is required to specify, during the network connection, the credit card number, sometimes in association with the expiration date.

Currently, the only checks performed by the seller by means of certification authorities are substantially the correctness of the credit card number, its validity (in terms of expiration date) and its credit availability.

In practice, there is currently no possibility to ascertain that the use of a given credit card number corresponds to the will of its legal owner.

Fraud affecting sellers and buyers, in which in practice credit card numbers are intercepted in order to use them for illegal purchases over a data communication network, occur in fact almost everyday.

In order to obviate these often very severe drawbacks, encryption software has been provided which allows the user to send his credit card number in encrypted form, allowing only the seller or the bank that approves the release of funds to decrypt it.

However, these precautions can be bypassed by obtaining the credit card numbers directly from the servers of the bank or of credit institutions or from a conventional storekeeper.

The aim of the present invention is to provide an apparatus particularly for supporting sales over a data communication network which solves the above mentioned drawbacks of devices which use currently available methods, particularly by guaranteeing the seller that the association between ownership of the credit card and the number of such card is correct and by guaranteeing the buyer that the purchases made do not allow third parties effective access to his personal credit.

Within this aim, an important object of the present invention is to provide an apparatus which can be integrated perfectly with current technologies, methods and protocols for exchanges over data communication networks.

Another object of the present invention is to provide an apparatus which is particularly flexible in terms of use and can be applied to the most disparate application situations regarding commercial distribution and sales over a data communication network.

Another object of the present invention is to provide an apparatus which can be manufactured with known technologies and equipment.

This aim and these and other objects which will become better apparent hereinafter are achieved by an apparatus particularly for supporting sales over a data communication network, characterized in that it comprises:
-- at least one first data processing unit, which is provided with an operating system and in which a database is implemented together with a corresponding management system adapted to store information related to the credit cards of customers, which are associated with access passwords, and with input/output peripherals;
-- at least one second data processing unit for validating business rules, such as the methods for communicating transaction verification;
-- at least one third processing unit, which is adapted to provide a channel for accessing the data communication network;
-- at least one fourth processing unit for managing remote accesses, implemented software and hardware for protection such as a firewall or the like, implemented software suitable for management of communications and applications;
-- means for connection and management of warning/authorization communications with customers via network access, fixed telephony, fax, mobile telephony.

Further characteristics and advantages of the present invention will become better apparent from the description of an embodiment thereof, illustrated only by way of non-limitative example in the accompanying drawing, wherein:

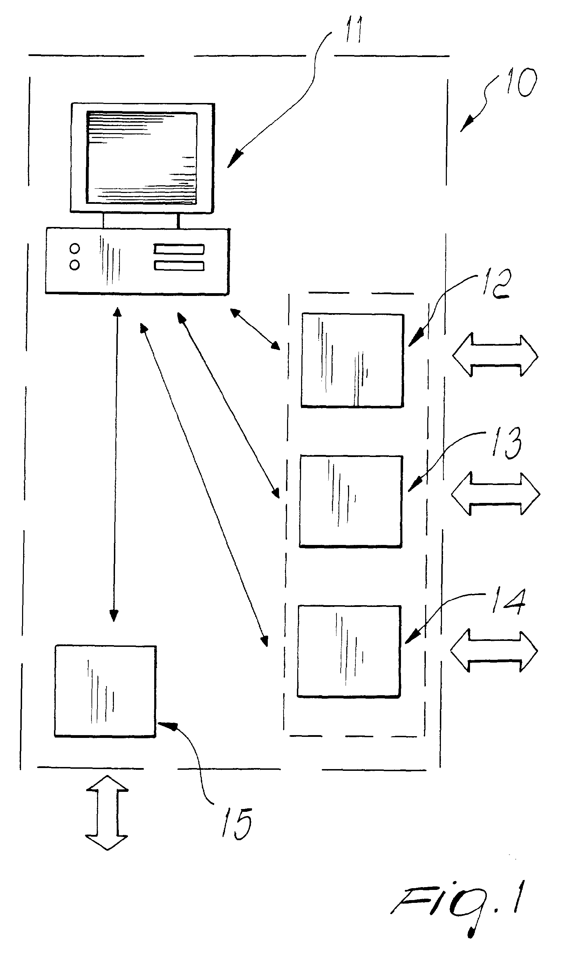

Figure 1 is a block diagram of the apparatus according to the invention.

With particular reference to Figure 1, an apparatus particularly for supporting sales over a data communication network, according to the invention, is generally illustrated by means of a block diagram and is designated by the reference numeral 10.

In particular, the apparatus 10 comprises a first data processing unit 11 provided with an operating system and in which a database (typically of the relational type) is implemented together with a corresponding management system which is adapted to store information related to the credit cards of customers associated with access passwords and, advantageously, related to the customers themselves, and with input/output peripherals (not shown, such as printers, mass storage, et cetera); a second processing unit 12 for validating the business rules, such as the communication method chosen by the customer for transaction verification; a third processing unit 13, which is adapted to provide a channel for access to the data communication network; a fourth processing unit 14 for managing remote accesses, implemented software and hardware for protection such as a firewall or the like, implemented software suitable for management of communications and applications.

In particular, the apparatus 10 also has, in this case, implemented encryption software.

The apparatus 10 also comprises means for connection and management of communications over a data communication network that are negotiated with the customer; such means are generally represented by the block 15 and are typically network access, fixed telephony, fax, mobile telephony, teletext, et cetera.

In more complex embodiments of the apparatus 10 it is possible to provide server devices dedicated specifically to the management of the individual methods for communication with the customer.

Advantageously, in this case, the first processing unit 11 also implements: a seller database, a transaction history log, an authorization history log, and a customer database which comprises the data of each customer and the references to the communication criteria chosen by the customer to be used for transaction verification.

It is also possible to provide for the implementation of logic encryption software.

Moreover, modem electronic computers allow to integrate more than one of said processing units, which in practice can even be merely virtual.

The operation of the apparatus 10 according to the invention is in practice as follows.

If a user decides to make a purchase over a data communication network, he can safely send, as requested by the seller, the number of his credit card and its expiration date, if requested.

At this point, in practice two parallel and complementary checking mechanisms are activated.

First of all, the seller contacts the bank or other certification authority to ensure that the credit card is usable at the time of purchase, i.e., has adequate credit and has not expired.

However, this check, as mentioned, does not fully ensure that a credit card which is per se usable corresponds to the will of its legal owner as regards the purchase.

In this case, a message regarding the proposed transaction about to occur is sent to the service center provided with the apparatus 10 according to the invention, with which the customer has negotiated beforehand his inclusion in the database and the method for verification communication.

The service center, provided with the apparatus 10, compares the number of the credit card with the numbers of the cards stored in the customer archive.

If the credit card is found to be registered in the database, the service center notifies, in the form negotiated with the customer (for example by means of an SMS, WAP, fax, telephone, UMTS message) that a trade transaction with a credit card in his name is about to occur.

At this point the customer, having been appropriately notified of the transaction, can check whether it is actually a transaction that he has produced himself or whether his credit card number has been used fraudulently.

In particular, if this second case has occurred, the user can contact the service center and by means of an appropriate secret password, access code or signature he can block the transaction, thus protecting himself against the fraud that was about to be committed and protecting the seller, who also is informed of the fraudulent nature of the proposed transaction.

If otherwise the credit card is not found as registered in the database, the service center warns the seller of this fact.

In practice it has been observed that the present invention has achieved the intended aim and objects.

In particular, it should be noted that with the apparatus according to the invention it is practically impossible to perform a trade transaction without the user being perfectly aware of its validity or not.

In particular, in this manner the user is fully protected, since he knows that even if his credit card number were intercepted and used illegally, this would never lead anywhere, since before the transaction is completed and there is an actual exchange of money he would be warned and could therefore block the entire process.

Moreover, the protection for the seller is also evident; in this manner, the seller can know unequivocally that the association between the credit card number and the owner is perfectly legitimate.

It should also be noted that the apparatus according to the invention can be provided according to actual configurations which are adapted to meet the most disparate requirements of application in order to ensure an adequate degree of security and control.

The present invention is susceptible of numerous modifications and variations, all of which are within the scope of the inventive concept.

The technical details may be replaced with other technically equivalent elements.

The materials and the dimensions may be any according to requirements.

The disclosures in Italian Patent Application No. PD2000A000102, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An apparatus particularly for supporting sales over a data communication network, **characterized in that** it comprises:
-- at least one first data processing unit, which is provided with an operating system and in which a database is implemented together with a corresponding management system adapted to store information related to the credit cards of customers, which are associated with access passwords, and with input/output peripherals;
-- at least one second data processing unit for validating business rules, such as the methods for communicating transaction verification;
-- at least one third processing unit, which is adapted to provide a channel for accessing the data communication network;
-- at least one fourth processing unit for managing remote accesses, implemented software and hardware for protection such as a firewall or the like, implemented software suitable for management of communications and applications;
-- means for connection and management of warning/authorization communications with customers via network access, fixed telephony, fax, mobile telephony, teletext.

2. The apparatus according to claim 1, **characterized in that** it comprises implemented encryption software.

3. The apparatus according to one or more of the preceding claims, **characterized in that** it comprises one or more server devices for managing said means for connection and management of communications with customers via network access, fixed telephony, fax, mobile telephony, teletext.

4. The apparatus according to one or more of the preceding claims, **characterized in that** it comprises a seller database implemented in said first processing unit.

5. The apparatus according to one or more of the preceding claims, **characterized in that** it comprises a transaction history log implemented in said first processing unit.

6. The apparatus according to one or more of the preceding claims, **characterized in that** it comprises an authorization history log implemented in said first processing unit.

7. The apparatus according to one or more of the preceding claims, **characterized in that** it comprises a customer database implemented in said first processing unit.

8. The apparatus according to one or more of the preceding claims, **characterized in that** one or more of said processing units is substantially virtual.
